# EUROPEAN PATENT SPECIFICATION

(11) **EP 4 311 349 B1**
(45) Date of publication and mention of the grant of the patent: **02.12.2026**
(21) Application number: 21930731.1
(22) Date of filing: 16.03.2021
(51) Int. Cl.: H04W 72/12, H04L 5/00

(54) **METHOD AND APPARATUS FOR CONFIGURING DOWNLINK CONTROL CHANNEL, METHOD AND APPARATUS FOR DETERMINING DOWNLINK CONTROL CHANNEL, AND DEVICE AND MEDIUM**
VERFAHREN UND VORRICHTUNG ZUR KONFIGURATION EINES DOWNLINK-STEUERKANALS, VERFAHREN UND VORRICHTUNG ZUR BESTIMMUNG EINES DOWNLINK-STEUERKANALS SOWIE VORRICHTUNG UND MEDIUM
PROCÉDÉ ET APPAREIL DE CONFIGURATION D'UN CANAL DE COMMANDE DE LIAISON DESCENDANTE, PROCÉDÉ ET APPAREIL DE DÉTERMINATION D'UN CANAL DE COMMANDE DE LIAISON DESCENDANTE, DISPOSITIF ET SUPPORT

(43) Date of publication of application: 24.01.2024
(73) Proprietor: Beijing Xiaomi Mobile Software Co., Ltd., Beijing 100085 (CN)
(72) Inventor: FU, Ting, Beijing 100085 (CN)
(74) Representative: dompatent
(86) International application number: PCT/CN2021/081101
(87) International publication number: WO 2022/193135

(56) References cited:
- WO-A1-2021/024494
- WO-A1-2021/024494
- US-A1- 2020 314 881
- US-A1- 2020 351 129
- US-A1- 2021 022 167
- MODERATOR (INTERDIGITAL ET AL: "Discussion summary #5 of [104-e-NR-52-71GHz-04]", vol. RAN WG1, no. e-Meeting; 20210125 - 20210205, 8 February 2021 (2021-02-08), XP051977805, Retrieved from the Internet <URL:https://ftp.3gpp.org/tsg_ran/WG1_RL1/TSGR1_104-e/Docs/R1-2102243.zip R1-2102243_Discussion Summary #5 of Beam management for new SCSs.docx> [retrieved on 20210208]
- NTT DOCOMO, INC: "Enhancements on multi-TRP/panel transmission", 3GPP DRAFT; R1-1912893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 8 November 2019 (2019-11-08), Mobile Competence Centre ; 650, route des Lucioles ; F-06921 Sophia-Antipolis Cedex ; France , XP051820229

## Description

### TECHNICAL FIELD

The disclosure relates to the field of wireless communication technologies, and in particular, to a method and an apparatus for configuring a downlink control channel, a method and an apparatus for determining a downlink control channel, a device and a medium.

### BACKGROUND

One downlink control information (DCI) may schedule one physical downlink shared channel (PDSCH) or one physical uplink shared channel (PUSCH) to ensure scheduling flexibility.

When a sub-carrier space (SCS) is 960 KHz, a corresponding slot is 1/64ms. When the SCS is larger and the slot is smaller, it may lead to high overhead for DCI monitoring if each PDSCH is scheduled by one separate DCI.

One DCI may schedule PDSCHs/PUSCHs of multiple slots in a multiple-transmission-time-interval (multi-TTI) scenario. An example in a multi-TTI PDSCH scheduling scenario is used for illustration: one DCI may schedule 4 PDSCHs and the 4 PDSCHs sequentially corresponds to 4 consecutive slots. The 4 PDSCHs may be used to transmit different data, that is, different transport blocks (TBs). The multi-TTI scheduling mode may reduce the number of DCIs, thereby reducing complexity of monitoring the DCI by a user equipment (UE).

In the multi-TTI PDSCH scheduling scenario, the number of PDSCHs scheduled by one DCI may be semi-statically configured by a high layer. Or, a value range may be indicated by a protocol or configured by a high layer signaling and the number of PDSCHs may be dynamically indicated by the DCI.

WO2021024494A1 discloses a terminal and a radio communication method in next-generation mobile communication systems. MODERATOR (INTERDIGITAL ET AL: "Discussion summary #5 of [104-e-NR-52-71 GHz-04]", 3GPP DRAFT; R1-2102243, 2021-02-08, XP051977805 discloses all issues discussed on beam management and timings associated with beam-based operation for new SCSs to support NR from 52.6 GHz to 71 GHz in RAN#104-e.

### SUMMARY

In view of this, a method and an apparatus for configuring a downlink control channel, a method and an apparatus for determining a downlink control channel, and a device and a medium are provided in embodiments of the disclosure. The invention is set out in the appended set of claims. The scope of the invention is defined and limited by the appended independent claims. Further embodiments are set out in the appended dependent claims.

The technical solutions provided in embodiments of the disclosure may include the following beneficial effects. The multi-TTI PDSCH, scheduled by the DCI, is configured to only include the first category of PDSCH, or only the second category of PDSCH, or simultaneously include the first category of PDSCH and the second category of PDSCH, the scheduling offset between each of the first category of PDSCH and the PDCCH of the DCI is less than the preset threshold, and the scheduling offset between each of the second category of PDSCH and the PDCCH of the DCI is greater than or equal to the preset threshold, so that the multi-TTI PDSCH scheduled by the DCI includes PDSCHs in various manners. In the technical solutions provided in embodiments of the disclosure, TCIs of different-type PDSCHs are determined.

It is to be understood that both the foregoing general description and the following detailed description are exemplary and explanatory only and are not restrictive of the disclosure.

### BRIEF DESCRIPTION OF THE DRAWINGS

The accompanying drawings described herein are used to provide a further understanding of embodiments of the disclosure and constitute a part of the disclosure. The implementations of the embodiments of the disclosure and their descriptions are used to explain the embodiments of the disclosure and do not constitute improper limitations to the embodiments of the disclosure. In the accompanying drawings:

The accompanying drawings, which are incorporated in and constitute a part of this specification, illustrate embodiments consistent with the disclosure and, together with the description, serve to explain the principles of the disclosure.
FIG. 1 is a flowchart illustrating a method for configuring a downlink control channel according to some embodiments.
FIG. 2 is a flowchart illustrating a method for determining a downlink control channel according to some embodiments.
FIG. 3 is a block diagram illustrating an apparatus for configuring a downlink control channel according to some embodiments.
FIG. 4 is a block diagram illustrating an apparatus for determining a downlink control channel according to some embodiments.
FIG. 5 is a block diagram illustrating a device for configuring a downlink control channel according to some embodiments.
FIG. 6 is a block diagram illustrating a device for determining a downlink control channel according to some embodiments.

### DETAILED DESCRIPTION

Embodiments of the disclosure are now further described with reference to the accompanying drawings and implementations.

References are now made in detail to the embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the disclosure. Instead, they are merely examples of apparatuses and methods consistent with aspects related to the disclosure as recited in the appended claims.

A transmission configuration indication (TCI) in new radio (NR) is configured to indicate a quasi-co-location (QCL) of two signals on a spatial channel. The QCL represents a similarity of the two signals on the spatial channel. The QCL corresponds to that large-scale parameters of a channel experienced by a symbol on a certain antenna port may be inferred from a channel experienced by a symbol on another antenna port. The large-scale parameters may include a delay spread, an average delay, a Doppler spread, a Doppler offset, an average gain, and a spatial Rx parameter. The spatial Rx parameter corresponds to related information of a Tx beam.

In NR, the large-scale parameters are divided into 4 types so that the system configures the parameters in different scenarios where a user equipment (UE) may be located as follows:
a QCL-Type A,
a QCL-Type B,
a QCL-Type C, and
a QCL-Type D.

Large-scale parameters corresponding to the QCL-Type A include a delay spread, an average delay, a Doppler spread and a Doppler offset.

Large-scale parameters corresponding to the QCL-Type B include a Doppler spread and a Doppler offset.

Large-scale parameters corresponding to the QCL-Type C include a Doppler offset and an average delay.

Large-scale parameters corresponding to the QCL-Type D include a spatial Rx parameter.

The QCL-Type D is configured to indicate information about a Tx beam of two signals.

The multiple-transmission-time-interval (multi-TTI) physical downlink shared channel (PDSCH) scheduled by one downlink control information (DCI) includes two categories of PDSCHs simultaneously, in which a scheduling offset between one category of PDSCH and a physical downlink control channel (PDCCH) is less than a preset threshold and a scheduling offset between another category of PDSCH and the PDCCH is greater than or equal to the preset threshold, and the preset threshold may be Time Duration For QCL. In this case, it is a problem that needs to be solved how to determine QCL information of the PDSCH.

A method for configuring a downlink control channel is provided in embodiments of the disclosure and performed by a network side device. The network side device may be a base station (BS) device. The method includes:

configuring a multi-TTI PDSCH scheduled by a DCI, and a TCI of a QCL for each of the multi-TTI PDSCH is the same as a TCI of a control resource set (CORESET) with a smallest index in CORESETs in a search space of a nearest slot, from the PDSCH, to which a user equipment is monitoring.

The method is applicable to a scenario in which the multi-TTI PDSCH is scheduled by one DCI, and each of the multi-TTI PDSCH corresponds to the same transport block (TB) repeatedly transmitted.

The method is also applicable to a scenario in which the multi-TTI PDSCH is scheduled by one DCI, and different PDSCHs in the multi-TTI PDSCH correspond to different TBs.

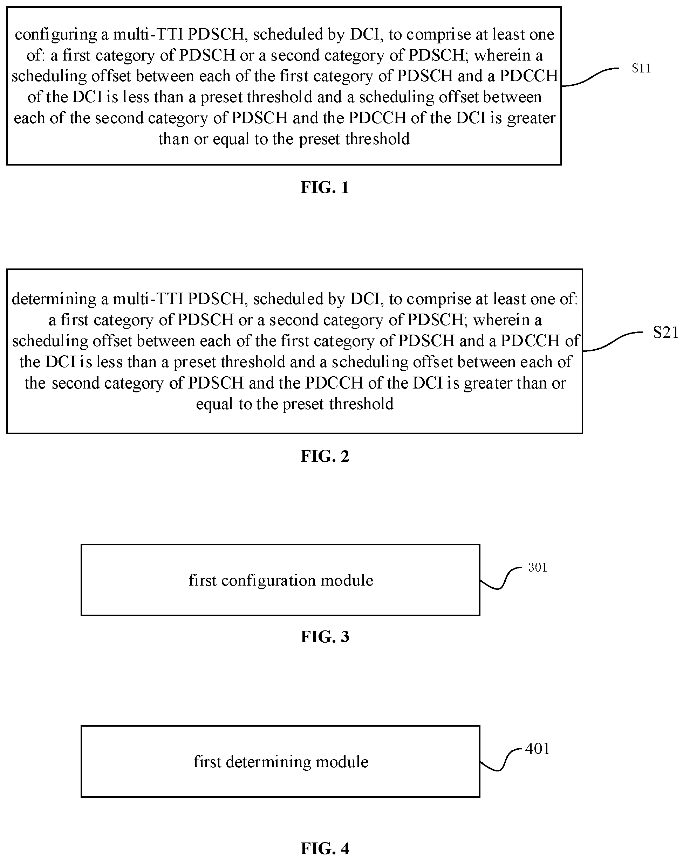

A method for configuring a downlink control channel is provided in embodiments of the disclosure and performed by a network side device. The network side device may be a base station device. Referring to FIG. 1, FIG. 1 is a flowchart illustrating a method for configuring a downlink control channel according to some embodiments. As illustrated in FIG. 1, the method includes the following step.

At step S11, a multi-TTI PDSCH, scheduled by DCI, is configured, to include at least one of: a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold.

In an implementation, the preset threshold is defined as Time Duration For QCL.

In an implementation, a unit of the preset threshold is a time domain symbol.

In an implementation, the preset threshold is a value configured by a base station.

In an implementation, the preset threshold is a value configured by a BS, which is related to a sub-carrier space (SCS). For example, when the SCS is 60 KHz, the value is configured as 7 time domain symbols.

In embodiments of the disclosure, the multi-TTI PDSCH scheduled by the DCI only includes the first category of PDSCH, or only include the second category of PDSCH, or simultaneously include the first category of PDSCH and the second category of PDSCH, the scheduling offset between each of the first category of PDSCH and the PDCCH of the DCI is less than the preset threshold and the scheduling offset between each of the second category of PDSCH and the PDCCH of the DCI is greater than or equal to the preset threshold, so that the multi-TTI PDSCH scheduled by the DCI includes PDSCHs in various manners, thereby improving compatibility of DCI scheduling.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configuring a TCI of a QCL for each PDSCH in the first category of PDSCH to be the same as a TCI of a CORESET with a smallest index in CORESETs in a search space of a nearest slot, from the PDSCH, to which a user equipment is monitoring.

TCIs corresponding to different first category of PDSCH in all first category of PDSCH in the multi-TTI PDSCH scheduled by the DCI may be different.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH; in which a scheduling offset between each of the first category of PDSCH and a PDCCH of the DCI is less than a preset threshold; and configuring a TCI of a QCL for each PDSCH in the first category of PDSCH to be the same as a TCI of a CORESET with a smallest index in CORESETs in a search space of a nearest slot, from the PDSCH, to which a user equipment is monitoring.

TCIs corresponding to different first category of PDSCH in all first category of PDSCH in the multi-TTI PDSCH scheduled by the DCI may be different.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configuring a TCI of a QCL for the first PDSCH in the first category of PDSCH to be the same as a TCI of a CORESET with a smallest index in CORESETs in a search space of a nearest slot, from the PDSCH, to which a user equipment is monitoring.

TCIs corresponding to different first category of PDSCH in all first category of PDSCH in the multi-TTI PDSCH scheduled by the DCI may be different.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH; in which a scheduling offset between each of the first category of PDSCH and a PDCCH of the DCI is less than a preset threshold; and configuring a TCI of a QCL for the first PDSCH in the first category of PDSCH to be the same as a TCI of a CORESET with a smallest index in CORESETs in a search space of a nearest slot, from the PDSCH, to which a user equipment is monitoring.

TCIs corresponding to different first category of PDSCH in all first category of PDSCH in the multi-TTI PDSCH scheduled by the DCI may be different.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configuring a TCI of a QCL for the first PDSCH in the first category of PDSCH to be the same as a TCI of a CORESET with a smallest index in CORESETs in a search space of a nearest slot, from the PDSCH, to which a user equipment is monitoring, and a TCI of a QCL for each PDSCH in the first category of PDSCH except for the first PDSCH is the same as a TCI of the first PDSCH.

TCIs corresponding to each of the first category of PDSCH in all first category of PDSCH in the multi-TTI PDSCH scheduled by the DCI are the same.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH; in which a scheduling offset between each of the first category of PDSCH and a PDCCH of the DCI is less than a preset threshold; and configuring a TCI of a QCL for the first PDSCH in the first category of PDSCH to be the same as a TCI of a CORESET with a smallest index in CORESETs in a search space of a nearest slot, from the PDSCH, to which a user equipment is monitoring, and a TCI of a QCL for each PDSCH in the first category of PDSCH except for the first PDSCH is the same as a TCI of the first PDSCH.

TCIs corresponding to each of the first category of PDSCH in all first category of PDSCH in the multi-TTI PDSCH scheduled by the DCI are the same.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configuring a TCI of a QCL for at least one PDSCH in the second category of PDSCH to be the same as a TCI of the PDCCH of the DCI, in response to the DCI configured with no TCI.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold; and configuring a TCI of a QCL for at least one PDSCH in the second category of PDSCH to be the same as a TCI of the PDCCH of the DCI, in response to the DCI configured with no TCI.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configuring a TCI of a QCL for at least one PDSCH in the second category of PDSCH to be the same as one TCI, in response to the DCI configured with the one TCI.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and configuring a TCI of a QCL for at least one PDSCH in the second category of PDSCH to be the same as one TCI, in response to the DCI configured with the one TCI.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configuring a TCI of a QCL for at least one PDSCH in the second category of PDSCH to be determined based on at least one of more than one TCI, in response to the DCI configured with the more than one TCI.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and configuring a TCI of a QCL for at least one PDSCH in the second category of PDSCH to be determined based on at least one of more than one TCI, in response to the DCI configured with the more than one TCI.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one PDSCH in the second category of PDSCH being less than or equal to a number of the more than one TCI, configuring the TCI of the QCL for the at least one PDSCH to correspond to N of the more than one TCI one to one, in which N is a number of PDSCHs in the second category of PDSCH.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and in response to more than one TCI being configured in the DCI, and a number of the at least one PDSCH in the second category of PDSCH being less than or equal to a number of the more than one TCI, configuring the TCI of the QCL for the at least one PDSCH to correspond to N of the more than one TCI one to one, in which N is a number of PDSCHs in the second category of PDSCH.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one PDSCH in the second category of PDSCH being less than or equal to a number of the more than one TCI, configuring the TCI of the QCL for the at least one PDSCH to correspond to last N of the more than one TCI one to one, in which N is a number of PDSCHs in the second category of PDSCH.

For example, there are four TCIs in the DCI, and the second category of PDSCH include three PDSCHs, a number of PDSCHs in the second category of PDSCH is less than a number of TCIs configured in the DCI, the TCIs of the three PDSCHs correspond to last three of the four TCIs one to one, and the TCI of each of the three PDSCHs is determined based on a corresponding TCI one to one.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, configuring the TCI of the QCL for the at least one PDSCH to correspond to last N of the more than one TCI one to one, in which N is a number of PDSCHs in the second category of PDSCH.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and
configuring the TCI of the QCL for the at least one PDSCH to correspond to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
configuring a time domain interval between two PDSCH slots corresponding to two of the more than one TCI to be greater than or equal to a set interval, in response to the two of the more than one TCI configured in the DCI corresponding to different QCL type D.

In an implementation, the set interval is 0 time domain symbol.

In an implementation, the set interval is greater than 0 time domain symbol.

In an implementation, the set interval is configured by a base station.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and
configuring the TCI of the QCL for the at least one PDSCH to correspond to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
configuring a time domain interval between two PDSCH slots corresponding to two of the more than one TCI to be greater than or equal to a set interval, in response to the two of the more than one TCI configured in the DCI corresponding to different QCL type D.

In an implementation, the set interval is 0 time domain symbol.

In an implementation, the set interval is greater than 0 time domain symbol.

In an implementation, the set interval is configured by a base station.

A method for configuring a downlink control channel is provided in embodiments of the disclosure and performed by a network side device. The network side device may be a base station device. The method includes:
configuring a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and
configuring the TCI of the QCL for the at least one PDSCH to correspond to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
configuring a time domain interval between two PDSCH slots corresponding to two of the more than one TCI to be greater than or equal to a set interval related, in response to the two of the more than one TCI configured in the DCI corresponding to different QCL type D, and configuring the time domain interval between the two PDSCH slots corresponding to the two of the more than one TCI to be related to a subcarrier spacing.

In an implementation, time domain intervals between the two PDSCH slots corresponding to the two TCIs are different in different subcarrier spacings.

A method for configuring a downlink control channel is provided in embodiments of the disclosure and performed by a network side device. The network side device may be a base station device. The method includes:
configuring a multi-TTI PDSCH, scheduled by DCI, to include a second category of PDSCH; in which a scheduling offset between each of the second category of PDSCH and the PDCCH of the DCI is greater than or equal to the preset threshold, and
configuring the TCI of the QCL for the at least one PDSCH to correspond to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
configuring a time domain interval between two PDSCH slots corresponding to two of the more than one TCI to be greater than or equal to a set interval related, in response to the two of the more than one TCI configured in the DCI corresponding to different QCL type D, and configuring the time domain interval between the two PDSCH slots corresponding to the two of the more than one TCI to be related to a subcarrier spacing.

In an implementation, time domain intervals between the two PDSCH slots corresponding to the two TCIs are different in different subcarrier spacings.

A method for determining a downlink control channel is provided in embodiments of the disclosure and performed by a user equipment. Referring to FIG. 2, FIG. 2 is a flowchart illustrating a method for determining a downlink control channel according to some embodiments. As illustrated in FIG. 2, the method includes the following step.

At step S21, a multi-TTI PDSCH, scheduled by DCI, is determined, to include at least one of: a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold.

In an implementation, the preset threshold is defined as TimeDurationForQCL.

In an implementation, a unit of the preset threshold is a time domain symbol.

In an implementation, the preset threshold is a value configured by a base station.

In an implementation, the preset threshold is a value configured by a base station, which is related to an SCS. For example, when the SCS is 60 KHz, the value is configured as 7 time domain symbols.

In embodiments of the disclosure, in response to a configuration of the network side device, it is determined that the multi-TTI PDSCH scheduled by the DCI only includes the first category of PDSCH, or only include the second category of PDSCH, or simultaneously include the first category of PDSCH and the second category of PDSCH, the scheduling offset between each of the first category of PDSCH and the PDCCH of the DCI is less than the preset threshold and the scheduling offset between each of the second category of PDSCH and the PDCCH of the DCI is greater than or equal to the preset threshold, so that the multi-TTI PDSCH scheduled by the DCI includes PDSCHs in various manners, thereby improving compatibility of DCI scheduling.

A method for determining a downlink control channel is provided in embodiments of the disclosure and performed by a user equipment. The method includes:
determining a multi-TTI PDSCH, scheduled by DCI, to include a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and determining that a TCI of a QCL for each of the first category of PDSCH is the same as a TCI of a CORESET with a smallest index in CORESETs in a search space of a nearest slot, from the PDSCH, to which the user equipment is monitoring.

A method for determining a downlink control channel is provided in embodiments of the disclosure and performed by a user equipment. The method includes:
determining a multi-TTI PDSCH, scheduled by DCI, to include a first category of PDSCH; in which a scheduling offset between each of the first category of PDSCH and a PDCCH of the DCI is less than a preset threshold; and determining that a TCI of a QCL for each of the first category of PDSCH is the same as a TCI of a CORESET with a smallest index in CORESETs in a search space of a nearest slot, from the PDSCH, to which the user equipment is monitoring.

A method for determining a downlink control channel is provided in embodiments of the disclosure and performed by a user equipment. The method includes:
determining a multi-TTI PDSCH, scheduled by DCI, to include a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and determining that a TCI of a QCL for the first PDSCH in the first category of PDSCH is the same as a TCI of a CORESET with a smallest index in CORESETs in a search space of a nearest slot, from the PDSCH, to which the user equipment is monitoring.

A method for determining a downlink control channel is provided in embodiments of the disclosure and performed by a user equipment. The method includes:
determining a multi-TTI PDSCH, scheduled by DCI, to include a first category of PDSCH; in which a scheduling offset between each of the first category of PDSCH and a PDCCH of the DCI is less than a preset threshold; and determining that a TCI of a QCL for the first PDSCH in the first category of PDSCH is the same as a TCI of a CORESET with a smallest index in CORESETs in a search space of a nearest slot, from the PDSCH, to which the user equipment is monitoring.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and determining that a TCI of a QCL for the first PDSCH in the first category of PDSCH is the same as a TCI of a CORESET with a smallest index in CORESETs in a search space of a nearest slot, from the PDSCH, to which the user equipment is monitoring, and a TCI of a QCL for each of the first category of PDSCH except for the first PDSCH is the same as a TCI of the first PDSCH.

A method for determining a downlink control channel is provided in embodiments of the disclosure and performed by a user equipment. The method includes:
determining a multi-TTI PDSCH, scheduled by DCI, to include a first category of PDSCH; in which a scheduling offset between each of the first category of PDSCH and a PDCCH of the DCI is less than a preset threshold; and determining that a TCI of a QCL for the first PDSCH in the first category of PDSCH is the same as a TCI of a CORESET with a smallest index in CORESETs in a search space of a nearest slot, from the PDSCH, to which the user equipment is monitoring, and a TCI of a QCL for each of the first category of PDSCH except for the first PDSCH is the same as a TCI of the first PDSCH.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determining that a TCI of a QCL of at least one PDSCH in the second category of PDSCH is the same as a TCI of the PDCCH of the DCI, in response to the DCI configured with no TCI.

A method for determining a downlink control channel is provided in embodiments of the disclosure and performed by a user equipment. The method includes:
determining a multi-TTI PDSCH, scheduled by DCI, to include a second category of PDSCH; in which a scheduling offset between each of the second category of PDSCH and the PDCCH of the DCI is greater than or equal to the preset threshold, and determining that a TCI of a QCL for at least one PDSCH in the second category of PDSCH is the same as a TCI of the PDCCH of the DCI, in response to the DCI configured with no TCI.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determining that a TCI of a QCL of at least one PDSCH in the second category of PDSCH is the same as one TCI, in response to the DCI configured with the one TCI.

A method for determining a downlink control channel is provided in embodiments of the disclosure and performed by a user equipment. The method includes:
determining a multi-TTI PDSCH, scheduled by DCI, to include a second category of PDSCH; in which a scheduling offset between each of the second category of PDSCH and the PDCCH of the DCI is greater than or equal to the preset threshold, and determining that a TCI of a QCL of at least one PDSCH in the second category of PDSCH is the same as one TCI, in response to the DCI configured with the one TCI.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determining that a TCI of a QCL of at least one PDSCH in the second category of PDSCH is determined based on at least one of more than one TCI, in response to the DCI configured with the more than one TCI.

A method for determining a downlink control channel is provided in embodiments of the disclosure and performed by a user equipment. The method includes:
determining a multi-TTI PDSCH, scheduled by DCI, to include a second category of PDSCH; in which a scheduling offset between each of the second category of PDSCH and the PDCCH of the DCI is greater than or equal to the preset threshold, and determining that a TCI of a QCL of at least one PDSCH in the second category of PDSCH is determined based on at least one of more than one TCI, in response to the DCI configured with the more than one TCI.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determining that the TCI of the QCL for the at least one PDSCH corresponds to N of the more than one TCI one to one, in which N is a number of PDSCHs in the second category of PDSCH.

A method for determining a downlink control channel is provided in embodiments of the disclosure and performed by a user equipment. The method includes:
determining multi-TTI PDSCH, scheduled by DCI, to include second category of PDSCH; in which a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determining that the TCI of the QCL for the at least one PDSCH corresponds to N of the more than one TCI one to one, in which N is a number of PDSCHs in the second category of PDSCH.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and
determining that the TCI of the QCL for the at least one PDSCH corresponds to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
determining that a time domain interval between two PDSCH slots corresponding to two of the more than one TCI is greater than or equal to a set interval, in response to the two of the more than one TCI configured in the DCI corresponding to different QCL type D.

A method for determining a downlink control channel is provided in embodiments of the disclosure and performed by a user equipment. The method includes:
determining a multi-TTI PDSCH, scheduled by DCI, to include a second category of PDSCH; in which a scheduling offset between each of the second category of PDSCH and the PDCCH of the DCI is greater than or equal to the preset threshold, and
determining that the TCI of the QCL for the at least one PDSCH corresponds to N of the more than one TCI one to one, in response to the more than one TCI being configured in the DCI and a number of the at least one of the second category of PDSCH being less than or equal to a number of the more than one TCI, in which the N is a number of PDSCHs in the second category of PDSCH, and
determining that a time domain interval between two PDSCH slots corresponding to two of the more than one TCI is greater than or equal to a set interval, in response to the two of the more than one TCI configured in the DCI corresponding to different QCL type D.

A method for determining a downlink control channel is provided in embodiments of the disclosure and performed by a user equipment. The method includes:
determining a multi-TTI PDSCH, scheduled by DCI, to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and
determining that the TCI of the QCL of the at least one PDSCH corresponds to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
determining that a time domain interval between two PDSCH slots corresponding to two of the more than one TCI is greater than or equal to a set interval in response to the two of the more than one TCI configured in the DCI corresponding to different QCL type D, and
determining that the time domain interval between the two PDSCH slots corresponding to the two TCIs is related to a subcarrier spacing.

A method for determining a downlink control channel is provided in embodiments of the disclosure and performed by a user equipment. The method includes:
determining a multi-TTI PDSCH, scheduled by DCI, to include a second category of PDSCH; in which a scheduling offset between each of the second category of PDSCH and the PDCCH of the DCI is greater than or equal to the preset threshold, and
determining that the TCI of the QCL for the at least one PDSCH corresponds to N of more than one TCI one to one, in response to the more than one TCI being configured in the DCI and a number of the at least one of the second category of PDSCH being less than or equal to a number of the more than one TCI, in which N is a number of PDSCHs in the second category of PDSCH, and
determining that a time domain interval between two PDSCH slots corresponding to two of the more than one TCI is greater than or equal to a set interval in response to the two of the more than one TCI configured in the DCI corresponding to different QCL type D, and
determining that the time domain interval between the two PDSCH slots corresponding to the two TCIs is related to a subcarrier spacing.

An apparatus for configuring a downlink control channel is provided in embodiments of apparatus disclosure and implemented in a network side device. The network side device may be a base station. Referring to FIG. 3, FIG. 3 is a block diagram illustrating an apparatus for configuring a downlink control channel according to some embodiments. As illustrated in FIG. 3, the apparatus includes a first configuration module 301.

The first configuration module 301 is configured to configure a multi-TTI PDSCH, scheduled by DCI, to include at least one of: a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold.

An apparatus for configuring a downlink control channel is provided in embodiments of apparatus disclosure and implemented in a network side device. The network side device may be a base station. The apparatus includes a second configuration module.

The second configuration module is configured to configure a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configure a TCI of a QCL for each of the first category of PDSCH to be the same as a TCI of a CORESET with a smallest index in CORESETs in a search space of a nearest slot, from the PDSCH, to which a user equipment is monitoring.

An apparatus for configuring a downlink control channel is provided in embodiments of apparatus disclosure and implemented in a network side device. The network side device may be a base station. The apparatus includes a third configuration module.

The third configuration module is configured to configure a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configure a TCI of a QCL for the first PDSCH in the first category of PDSCH to be the same as a TCI of a CORESET with a smallest index in CORESETs in a search space of a nearest slot, from the PDSCH, to which a user equipment is monitoring.

An apparatus for configuring a downlink control channel is provided in embodiments of apparatus disclosure and implemented in a network side device. The network side device may be a base station. The apparatus includes a fourth configuration module.

The fourth configuration module is configured to configure a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and configure a TCI of a QCL for the first PDSCH in the first category of PDSCH to be the same as a TCI of a CORESET with a smallest index in CORESETs in a search space of a nearest slot, from the PDSCH, to which a user equipment is monitoring, and configure a TCI of a QCL for each of the first category of PDSCH except for the first PDSCH to be the same as a TCI of the first PDSCH.

An apparatus for configuring a downlink control channel is provided in embodiments of apparatus disclosure and implemented in a network side device. The network side device may be a base station. The apparatus includes a fifth configuration module.

The fifth configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configure a TCI of a QCL for at least one PDSCH in the second category of PDSCH to be the same as a TCI of the PDCCH of the DCI, in response to the DCI configured with no TCI.

An apparatus for configuring a downlink control channel is provided in embodiments of apparatus disclosure and implemented in a network side device. The network side device may be a base station. The apparatus includes a sixth configuration module.

The sixth configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configure a TCI of a QCL for at least one PDSCH in the second category of PDSCH to be the same as one TCI, in response to DCI configured with the one TCI.

An apparatus for configuring a downlink control channel is provided in embodiments of apparatus disclosure and implemented in a network side device. The network side device may be a base station. The apparatus includes a seventh configuration module.

The seventh configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and configure a TCI of a QCL for at least one PDSCH in the second category of PDSCH to be determined based on at least one of more than one TCI, in response to the DCI configured with the more than one TCI.

An apparatus for configuring a downlink control channel is provided in embodiments of apparatus disclosure and implemented in a network side device. The network side device may be a base station. The apparatus includes an eighth configuration module.

The eighth configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, configure the TCI of the QCL for the at least one PDSCH to correspond to N of the more than one TCI one to one, in which N is a number of PDSCHs in the second category of PDSCH.

An apparatus for configuring a downlink control channel is provided in embodiments of apparatus disclosure and implemented in a network side device. The network side device may be a base station. The apparatus includes a ninth configuration module.

The ninth configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, configure the TCI of the QCL for the at least one PDSCH to correspond to N of the more than one TCI one to one, in which N is a number of PDSCHs in the second category of PDSCH, and configure a time domain interval between two PDSCH slots corresponding to two of the more than one TCI to be greater than or equal to a set interval, in response to the two of the more than one TCI configured in the DCI corresponding to different QCL type D.

An apparatus for configuring a downlink control channel is provided in embodiments of apparatus disclosure and implemented in a network side device. The network side device may be a base station. The apparatus includes a tenth configuration module.

The tenth configuration module is configured to configure a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, configure the TCI of the QCL for the at least one PDSCH to correspond to N of the more than one TCI one to one, in which N is a number of PDSCHs in the second category of PDSCH, and configure a time domain interval between two PDSCH slots corresponding to two of the more than one TCI to be greater than or equal to a set interval, in response to the two of the more than one TCI configured in the DCI corresponding to different QCL type D, and configure the time domain interval between the two PDSCH slots corresponding to the two of the more than one TCI to be related to a subcarrier spacing.

An apparatus for determining a downlink control channel is provided in embodiments of the disclosure and implemented in a user equipment. Referring to FIG. 4, FIG. 4 is a block diagram illustrating an apparatus for determining a downlink control channel according to some embodiments. As illustrated in FIG. 4, the apparatus includes a first determining module 401.

The first determining module 401 is configured to determine a multi-TTI PDSCH, scheduled by DCI, to include at least one of: a first category of PDSCH or a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold.

An apparatus for determining a downlink control channel is provided in embodiments of the disclosure and implemented in a user equipment. The apparatus includes a second determining module.

The second determining module is configured to determine a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and determine that a TCI of a QCL for each of the first category of PDSCH is the same as a TCI of a CORESET with a smallest index in CORESETs in a search space of a nearest slot, from the PDSCH, to which the user equipment is monitoring.

An apparatus for determining a downlink control channel is provided in embodiments of the disclosure and implemented in a user equipment. The apparatus includes a third determining module.

The third determining module is configured to determine a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between a first PDSCH of determining second category of PDSCH and the PDCCH of the DCI is greater than or equal to the preset threshold; and determine that a TCI of a QCL for the first PDSCH in the first category of PDSCH is the same as a TCI of a CORESET with a smallest index in CORESETs in a search space of a nearest slot, from the PDSCH, to which the user equipment is monitoring.

An apparatus for determining a downlink control channel is provided in embodiments of the disclosure and implemented in a user equipment. The apparatus includes a fourth determining module.

The fourth configuration module is configured to determine a multi-TTI PDSCH, scheduled by DCI, to include a first category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold; and determine that a TCI of a QCL for the first PDSCH in the first category of PDSCH is the same as a TCI of a CORESET with a smallest index in CORESETs in a search space of a nearest slot, from the PDSCH, to which the user equipment is monitoring, and determine that a QCL for each of the first category of PDSCH except for the first PDSCH is the same as a TCI of the first PDSCH.

An apparatus for determining a downlink control channel is provided in embodiments of the disclosure and implemented in a user equipment. The apparatus includes a fifth determining module.

The fifth determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determine that a TCI of a QCL for at least one PDSCH in the second category of PDSCH is the same as a TCI of the PDCCH of the DCI, in response to the DCI configured with no TCI.

An apparatus for determining a downlink control channel is provided in embodiments of the disclosure and implemented in a user equipment. The apparatus includes a sixth determining module.

The sixth determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determine that a TCI of a QCL for at least one PDSCH in the second category of PDSCH is the same as one TCI, in response to the DCI configured with the one TCI.

An apparatus for determining a downlink control channel is provided in embodiments of the disclosure and implemented in a user equipment. The apparatus includes a seventh determining module.

The seventh configuration module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and determine that a TCI of a QCL for at least one PDSCH in the second category of PDSCH is determined based on at least one of more than one TCI, in response to the DCI configured with the more than one TCI.

An apparatus for determining a downlink control channel is provided in embodiments of the disclosure and implemented in a user equipment. The apparatus includes a seventh determining module.

The seventh determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determine that the TCI of the QCL for the at least one PDSCH corresponds to N of the more than one TCI one to one, in which N is a number of PDSCHs in the second category of PDSCH.

An apparatus for determining a downlink control channel is provided in embodiments of the disclosure and implemented in a user equipment. The apparatus includes an eighth determining module.

The eighth determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determine that the TCI of the QCL for the at least one PDSCH corresponds to N of the more than one TCI one to one, in which N is a number of PDSCHs in the second category of PDSCH, and determine that a time domain interval between two PDSCH slots corresponding to two of the more than one TCI is greater than or equal to a set interval, in response to the two of the more than one TCI configured in the DCI corresponding to different QCL type D.

An apparatus for determining a downlink control channel is provided in embodiments of the disclosure and implemented in a user equipment. The apparatus includes a ninth determining module.

The ninth determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determine that the TCI of the QCL for the at least one PDSCH corresponds to N of the more than one TCI one to one, in which N is a number of PDSCHs in the second category of PDSCH, and determine that a time domain interval between two PDSCH slots corresponding to two of the more than one TCI is greater than or equal to a set interval, in response to the two of the more than one TCI configured in the DCI corresponding to different QCL type D.

An apparatus for determining a downlink control channel is provided in embodiments of the disclosure and implemented in a user equipment. The apparatus includes a tenth determining module.

The tenth determining module is configured to determine a multi-TTI PDSCH, scheduled by DCI, to include a second category of PDSCH or to include a first category of PDSCH and a second category of PDSCH; in which a scheduling offset between each of the first category of PDSCH and a PDCCH of the DCI is less than a preset threshold and a scheduling offset between each of the second category of PDSCH and the PDCCH of the DCI is greater than or equal to the preset threshold, and in response to more than one TCI being configured in the DCI, and a number of the at least one of the second category of PDSCH being less than or equal to a number of the more than one TCI, determine that the TCI of the QCL of the at least one PDSCH corresponds to N of the more than one TCI one to one, in which N is a number of PDSCHs in the second category of PDSCH, and determine that a time domain interval between two PDSCH slots corresponding to two of the more than one TCI is greater than or equal to a set interval, in response to the two of the more than one TCI configured in the DCI corresponding to different QCL type D, and determine that the time domain interval between the two PDSCH slots corresponding to the two of the more than one TCI is related to a subcarrier spacing.

A network side device is provided in embodiments of the disclosure and includes:
a processor; and
a memory for storing instructions executable by the processor.

The processor is configured to perform the executable instructions in the memory to implement steps of the method for configuring the downlink control channel.

A user equipment is provided in embodiments of the disclosure and includes:
a processor; and
a memory for storing instructions executable by the processor.

The processor is configured to execute the executable instructions in the memory to implement steps of the method for determining the downlink control channel.

A non-transitory computer-readable storage medium with executable instructions stored thereon is provided in embodiments of the disclosure. When the executable instructions are executed by a processor, steps of the method for configuring the downlink control channel are implemented.

A non-transitory computer-readable storage medium with executable instructions stored thereon is provided in embodiments of the disclosure. When the executable instructions are executed by a processor, steps of the method for determining the downlink control channel are implemented.

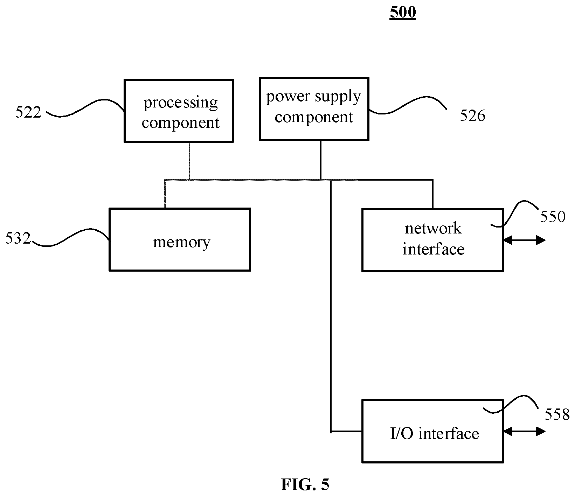

FIG. 5 is a diagram illustrating a device 500 for configuring a downlink control channel according to some embodiments. For example, the device 500 may be provided as a base station. Referring to FIG. 5, the device 500 includes a processing component 522, which further includes one or more processors, and memory resources represented by a memory 532, which are configured to store instructions executable by the processing component 522, and for example, an application. The application stored in the memory 532 may include one or more modules each of which corresponds to a set of instructions. In addition, the processing component 522 is configured to execute instructions, to perform the above method for configuring a downlink control channel.

The device 500 may further include a power supply component 526 configured to execute power management of the device 500, and a wired or wireless network interface 550 configured to connect the device 500 to a network, and an input/output(I/O) interface 558. The device 500 may operate an operating system stored in the memory 532, for example, Windows Server^{™}, Mac OS X^{™}, Unix^{™}, Linux^{™}, and FreeBSD^{™}.

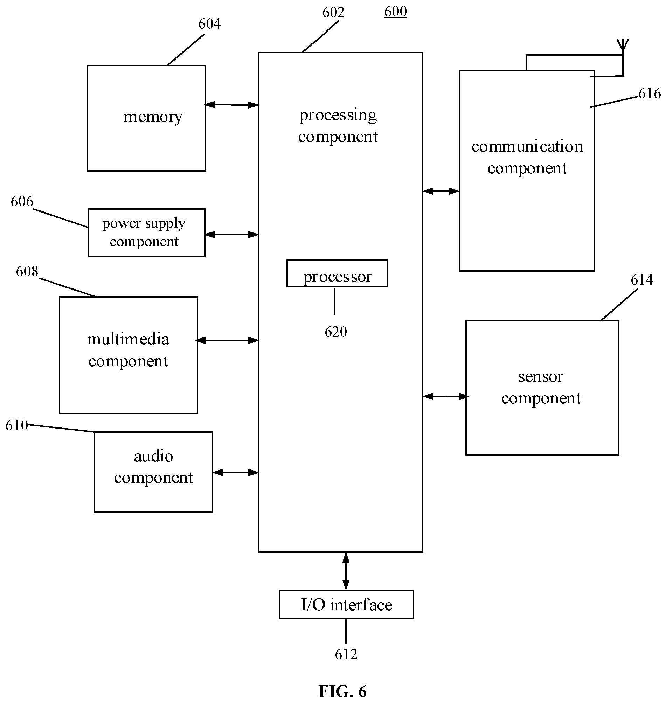

FIG. 6 is a block diagram illustrating a device 600 for determining a downlink control channel according to some embodiments. For example, the device 600 may be a mobile phone, a computer, a digital broadcasting terminal, a messaging device, a game console, a tablet device, a medical equipment, a fitness equipment, a personal digital assistant, etc.

Referring to FIG. 6, the device 600 may include one or more components: a processing component 602, a memory 604, a power supply component 606, a multimedia component 608, an audio component 610, an input/output (I/O) interface 612, a sensor component 614, and a communication component 616.

The processing component 602 generally controls the whole operation of the device 600, such as operations related to display, phone call, data communication, camera operation and recording operation. The processing component 602 may include one or more processors 620 to perform instructions, to complete all or part of steps of the above method. In addition, the processing component 602 may include one or more modules for the convenience of interaction between the processing component 602 and other components. For example, the processing component 602 may include a multimedia module for the convenience of interaction between the multimedia component 608 and the processing component 602.

The memory 604 is configured to store all types of data to support the operation of the device 600. Examples of the data include the instructions of any applications or methods operated on the device 600, contact data, phone book data, messages, pictures, videos, etc. The memory 604 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 606 may provide power supply for all components of the device 600. The power supply component 606 may include power supply management system, one or more power supplies, and other units related to generating, managing and distributing power for the device 600.

The multimedia component 608 includes an output interface screen provided between the device 600 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 608 includes a front camera and/or a rear camera. When the device 600 is in operation mode, such as shooting mode or video mode, the front camera or the rear camera may receive the external multimedia data. Each front camera and rear camera may be a fixed optical lens system or an optical lens system with a focal length and an optical zoom capacity.

The audio component 610 is configured as output and/or input signal. For example, the audio component 610 includes a microphone (MIC). When the device 600 is in operation mode, such as call mode, record mode, and speech recognition mode, the microphone is configured to receive external audio signals. The audio signals received may be further stored in the memory 604 or sent via the communication component 616. In some embodiments, the audio component 610 further includes a speaker configured to output an audio signal.

The I/O interface 612 provides an interface for the processing component 602 and the peripheral interface module, and the peripheral interface module may be a keyboard, a click wheel, a button, etc. The buttons may include but not limited to a home button, a volume button, a start button and a lock button.

The sensor component 614 includes one or more sensors, configured to provide various aspects of status assessment for the device 600. For example, the sensor component 614 may detect the on/off state of the device 600 and the relative positioning of the component. For example, the component is a display and a keypad of the device 600. The sensor component 614 may further detect the location change of the device 600 or one component of the device 600, the presence or absence of contact between the user and the device 600, the orientation or acceleration/deceleration of the device 600, and the temperature change of the device 600. The sensor component 614 may include a proximity sensor, which is configured to detect presence of the objects nearby without any physical contact. The sensor component 614 may further include a light sensor such as CMOS or CCD image sensor, which is configured to use in imaging applications. In some embodiments, the sensor component 614 may further include an acceleration transducer, a gyroscope sensor, a magnetic sensor, a pressure sensor or a temperature sensor.

The communication component 616 is configured for the convenience of wire or wireless communication between the device 600 and other devices. The device 600 may access wireless networks based on communication standard, such as Wi-Fi, 2G or 3G, or their combination. In some embodiments, the communication component 616 receives broadcast signals or broadcast-related information from an external broadcast management system via a broadcast channel. In some embodiments, the communication component 616 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In some embodiments, the device 600 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In some embodiments, a non-transitory computer readable storage medium is further provided which includes instructions, such as the memory 604 including instructions. The instructions may be executed by the processor 620 of the device 600 to complete the above methods. For example, the non-transitory computer-readable storage medium may be a ROM, a random access memory (RAM), a CD-ROM, a magnetic tape, a floppy disk, an optical data storage device, etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### Industrial Applicability

Multi-TTI PDSCH scheduled by DCI only include the first category of PDSCH, or only include the second category of PDSCH, or simultaneously include the first category of PDSCH and the second category of PDSCH, the scheduling offset between each of the first category of PDSCH and the PDCCH of the DCI is less than the preset threshold, and the scheduling offset between each of the second category of PDSCH and the PDCCH of the DCI is greater than or equal to the preset threshold, so that the multi-TTI PDSCH scheduled by the DCI include PDSCHs in various manners, thereby improving compatibility of DCI scheduling. In the technical solutions provided in embodiments of the disclosure, TCIs of different types of PDSCHs are determined.

## Claims

1. A method for configuring a downlink control channel, performed by a network device, comprising:
configuring (S11) a multiple-transmission-time-interval, multi-TTI, physical downlink shared channel, PDSCH, scheduled by downlink control information, DCI, to comprise a first category of PDSCH and a second category of PDSCH; wherein the first category of PDSCH comprises a plurality of PDSCHs, the second category of PDSCH comprises a plurality of PDSCHs, a scheduling offset between each of the PDSCHs in the first category of PDSCH and a physical downlink control channel, PDCCH, of the DCI is less than a preset threshold and a scheduling offset between each of the PDSCHs in the second category of PDSCH and the PDCCH of the DCI is greater than or equal to the preset threshold; and
performing multi-TTI PDSCH transmission according to the configuration;
**characterized in that**, the method further comprises:
configuring a transmission configuration indication, TCI, of a quasi-co-location, QCL, for each of the PDSCHs in the first category of PDSCH to be the same as a TCI of a control resource set, CORESET, with a smallest index in CORESETs in a search space of a nearest slot, from the PDSCH, to which a user equipment is monitoring; and
configuring a TCI of a QCL for at least one PDSCH in the second category of PDSCH to be the same as a TCI of the PDCCH of the DCI, in response to the DCI being configured with no TCI; or configuring, in response to the DCI being configured with one TCI, a TCI of a QCL for at least one PDSCH in the second category of PDSCH to be the same as the one TCI.

2. The method according to claim 1, further comprising:
configuring a TCI of a QCL for a first PDSCH in the first category of PDSCH to be the same as a TCI of a control resource set, CORESET, with a smallest index in CORESETs in a search space of a nearest slot, from the PDSCH, to which a user equipment is monitoring.

3. The method according to claim 2, further comprising:
configuring a TCI of a QCL for each of the PDSCHs in the first category of PDSCH except for the first PDSCH, to be the same as a TCI of the first PDSCH.

4. The method according to claim 1, further comprising:
configuring, in response to the DCI being configured with more than one TCI, a TCI of a QCL for at least one PDSCH in the second category of PDSCH to be determined based on at least one of the more than one TCI.

5. The method according to claim 4, wherein
configuring the TCI of the QCL for the at least one PDSCH in the second category of PDSCH to be determined based on the at least one of the more than one TCI comprises:
configuring the TCI of the QCL for the at least one PDSCH in the second category of PDSCH to correspond N of the more than one TCI one to one, in response to a number of the at least one PDSCH in the second category of PDSCH being less than or equal to a number of the more than one TCI, wherein N is equal to or greater than one, and is a number of PDSCHs in the second category of PDSCH.

6. The method according to claim 5, further comprising:
configuring, in response to two of the more than one TCI configured in the DCI being corresponding to different QCL type D, a time domain interval between two PDSCH slots corresponding to the two of the more than one TCI to be greater than or equal to a set interval.

7. The method according to claim 6, further comprising:
configuring the time domain interval between the two PDSCH slots corresponding to the two of the more than one TCI to be related to a subcarrier spacing.

8. A method for determining a downlink control channel, performed by a user equipment, comprising:
determining (S21) a multiple-transmission-time-interval, multi-TTI, physical downlink shared channel, PDSCH, scheduled by downlink control information, DCI, to comprise at least one of: a first category of PDSCH or a second category of PDSCH; wherein the first category of PDSCH comprises a plurality of PDSCHs, the second category of PDSCH comprises a plurality of PDSCHs, a scheduling offset between each of the PDSCHs in the first category of PDSCH and a physical downlink control channel, PDCCH, of the DCI is less than a preset threshold and a scheduling offset between each of the PDSCHs in the second category of PDSCH and the PDCCH of the DCI is greater than or equal to the preset threshold; and
performing multi-TTI PDSCH transmission according to the configuration;
**characterized in that**, the method further comprises:
determining that a transmission configuration indication, TCI, of a quasi-co-location, QCL, for each of the PDSCHs in the first category of PDSCH is the same as a TCI of a control resource set, CORESET, with a smallest index in CORESETs in a search space of a nearest slot, from the PDSCH, to which the user equipment is monitoring; and
determining that a TCI of a QCL for at least one PDSCH in the second category of PDSCH is the same as a TCI of the PDCCH of the DCI, in response to the DCI being configured with no TCI; or determining, in response to the DCI being configured with one TCI that a TCI of a QCL for at least one PDSCH in the second category of PDSCH is the same as the one TCI.

9. The method according to claim 8, further comprising:
determining that a TCI of a QCL for a first PDSCH in the first category of PDSCH is the same as a TCI of a control resource set, CORESET, with a smallest index in CORESETs in a search space of a nearest slot, from the PDSCH, to which the user equipment is monitoring.

10. The method according to claim 9, further comprising: determining that a TCI of a QCL for each of the PDSCHs in the first category of PDSCH except for the first PDSCH, is the same as a TCI of the first PDSCH.

11. The method according to claim 8, further comprising:
determining, in response to the DCI being configured with more than one TCI that a TCI of a QCL for at least one PDSCH in the second category of PDSCH is determined based on at least one of the more than one TCI.

12. The method according to claim 11,
determining that the TCI of the QCL for the at least one PDSCH in the second category of PDSCH is determined based on the at least one of the more than one TCI comprises:
determining the TCI of the QCL for the at least one PDSCH in the second category of PDSCH to correspond to N of the more than one TCI one to one, in response to a number of the at least one PDSCH in the second category of PDSCH being less than or equal to a number of the more than one TCI, wherein N is equal to or greater than one, and is a number of PDSCHs in the second category of PDSCH.

13. The method according to claim 12, further comprising:
determining, in response to two of the more than one TCI configured in the DCI being corresponding to different QCL type D, that a time domain interval between two PDSCH slots corresponding to the two of the more than one TCI is greater than or equal to a set interval.

14. The method according to claim 13, further comprising:
determining that the time domain interval between the two PDSCH slots corresponding to the two of the more than one TCI is related to a subcarrier spacing.

15. A device, comprising:
a processor; and
a memory for storing instructions executable by the processor;
wherein the processor is configured to execute the executable instructions in the memory to implement steps of the method of any one of claims 1 to 7 or the method of any one of claims 8 to 14.

## Patentansprüche

1. Verfahren zur Konfiguration eines Downlink-Steuerkanals, das von einer Netzwerkvorrichtung durchgeführt wird, umfassend:
Konfigurieren (S11) eines Physical Downlink Shared Channel, PDSCH, mit Multi-Übertragungszeitintervall, Multi-TTI, der durch Downlink-Steuerinformationen, DCI, so geplant wird, dass er eine erste PDSCH-Kategorie und eine zweite PDSCH-Kategorie aufweist; wobei die erste PDSCH-Kategorie eine Vielzahl von PDSCHs aufweist, die zweite PDSCH-Kategorie eine Vielzahl von PDSCHs aufweist, ein Scheduling-Versatz zwischen jedem der PDSCHs in der ersten PDSCH-Kategorie und einem Physical Downlink Control Channel, PDCCH, der DCI kleiner als ein voreingestellter Schwellenwert ist und ein Scheduling-Versatz zwischen jedem der PDSCHs der zweiten PDSCH-Kategorie und dem PDCCH der DCI größer oder gleich dem voreingestellten Schwellenwert ist; und
Durchführen einer Multi-TTI-PDSCH-Übertragung gemäß der Konfiguration; **dadurch gekennzeichnet, dass** das Verfahren ferner umfasst:
Konfigurieren einer Übertragungskonfigurationsanzeige, TCI, einer Quasi-Co-Location, QCL, für jeden der PDSCHs der ersten PDSCH-Kategorie so, dass sie mit einer TCI eines Control Resource Set, CORESET, übereinstimmt, der einen kleinsten Index unter den CORESETs in einem Suchraum eines nächstgelegenen Slots aufweist, ausgehend von dem PDSCH, den ein Benutzerendgerät überwacht; und
Konfigurieren einer TCI einer QCL für mindestens einen PDSCH der zweiten PDSCH-Kategorie so, dass sie mit einer TCI des PDCCH der DCI übereinstimmt, als Reaktion darauf, dass die DCI ohne TCI konfiguriert werden; oder als Reaktion darauf, dass die DCI mit einer TCI konfiguriert werden, Konfigurieren einer TCI einer QCL für mindestens einen PDSCH der zweiten PDSCH-Kategorie so, dass sie mit der einen TCI übereinstimmt.

2. Verfahren nach Anspruch 1, das ferner umfasst:
Konfigurieren einer TCI einer QCL für einen ersten PDSCH in der ersten PDSCH-Kategorie so, dass sie mit der TCI eines Control Resource Set, CORESET, übereinstimmt, der einen kleinsten Index unter den CORESETs im Suchraum eines nächstgelegenen Slots aufweist, ausgehend von dem PDSCH, den ein Benutzerendgerät überwacht.

3. Verfahren nach Anspruch 2, das ferner umfasst:
Konfigurieren einer TCI einer QCL für jeden der PDSCHs in der ersten PDSCH-Kategorie, mit Ausnahme des ersten PDSCH, so, dass er mit der TCI des ersten PDSCH übereinstimmt.

4. Verfahren nach Anspruch 1, das ferner umfasst:
Konfigurieren, als Reaktion darauf, dass die DCI mit mehr als einer TCI konfiguriert werden, einer TCI einer QCL für mindestens einen PDSCH in der zweiten PDSCH-Kategorie, der auf der Grundlage mindestens einer der mehr als einen TCI zu bestimmen ist.

5. Verfahren nach Anspruch 4, wobei
das Konfigurieren der TCI der QCL für den mindestens einen PDSCH in der zweiten PDSCH-Kategorie, der auf der Grundlage der mindestens einen der mehreren TCI zu bestimmen ist, umfasst:
Konfigurieren der TCI der QCL für den mindestens einen PDSCH der zweiten PDSCH-Kategorie, sodass sie N der mehr als einer TCI eins zu eins entspricht, als Reaktion darauf, dass eine Anzahl des mindestens einen PDSCH der zweiten PDSCH-Kategorie kleiner oder gleich einer Anzahl der mehr als einen TCI ist, wobei N gleich oder größer als eins ist und eine Anzahl von PDSCHs der zweiten PDSCH-Kategorie darstellt.

6. Verfahren nach Anspruch 5, das ferner umfasst:
Konfigurieren, als Reaktion darauf, dass zwei der mehr als eine TCI, die in den DCI konfiguriert sind, unterschiedlichen QCL-Typen D entsprechen, eines Zeitbereichsintervalls zwischen zwei PDSCH-Slots, die den beiden der mehr als einen TCI entsprechen, so dass dieses größer oder gleich einem festgelegten Intervall ist.

7. Verfahren nach Anspruch 6, das ferner umfasst:
Konfigurieren des Zeitbereichsintervalls zwischen den beiden PDSCH-Slots, die den beiden der mehr als einen TCI entsprechen, so, dass es mit einem Subcarrier-Abstand zusammenhängt.

8. Verfahren zur Bestimmung eines Downlink-Steuerkanals, das von einem Benutzerendgerät durchgeführt wird, umfassend:
Bestimmen (S21) eines Physical Downlink Shared Channel, PDSCH, mit Multi-Übertragungszeitintervall, Multi-TTI, der durch Downlink-Steuerinformationen, DCI, so geplant wird, dass er mindestens eines aus Folgendem aufweist: eine erste PDSCH-Kategorie und eine zweite PDSCH-Kategorie; wobei die erste PDSCH-Kategorie eine Vielzahl von PDSCHs aufweist, die zweite PDSCH-Kategorie eine Vielzahl von PDSCHs aufweist, ein Scheduling-Versatz zwischen jedem der PDSCHs in der ersten PDSCH-Kategorie und einem Physical Downlink Control Channel, PDCCH, der DCI kleiner als ein voreingestellter Schwellenwert ist und ein Scheduling-Versatz zwischen jedem der PDSCHs der zweiten PDSCH-Kategorie und dem PDCCH der DCI größer oder gleich dem voreingestellten Schwellenwert ist; und
Durchführen einer Multi-TTI-PDSCH-Übertragung gemäß der Konfiguration; **dadurch gekennzeichnet, dass** das Verfahren ferner umfasst:
Bestimmen, dass eine Übertragungskonfigurationsanzeige, TCI, einer Quasi-Co-Location, QCL, für jeden der PDSCHs der ersten PDSCH-Kategorie mit einer TCI eines Control Resource Set, CORESET, übereinstimmt, der einen kleinsten Index unter den CORESETs in einem Suchraum eines nächstgelegenen Slots aufweist, ausgehend von dem PDSCH, den das Benutzerendgerät überwacht; und
Bestimmen, dass eine TCI einer QCL für mindestens einen PDSCH der zweiten PDSCH-Kategorie mit einer TCI des PDCCH der DCI übereinstimmt, als Reaktion darauf, dass die DCI ohne TCI konfiguriert werden; oder als Reaktion darauf, dass die DCI mit einer TCI konfiguriert werden, Bestimmen, dass eine TCI einer QCL für mindestens einen PDSCH der zweiten PDSCH-Kategorie mit der einen TCI übereinstimmt.

9. Verfahren nach Anspruch 8, das ferner umfasst:
Bestimmen, dass eine TCI einer QCL für einen ersten PDSCH in der ersten PDSCH-Kategorie mit der TCI eines Control Resource Set, CORESET, übereinstimmt, der einen kleinsten Index unter den CORESETs im Suchraum eines nächstgelegenen Slots aufweist, ausgehend von dem PDSCH, den das Benutzerendgerät überwacht.

10. Verfahren nach Anspruch 9, das ferner umfasst: Bestimmen, dass eine TCI einer QCL für jeden der PDSCHs in der ersten PDSCH-Kategorie, mit Ausnahme des ersten PDSCH, mit der TCI des ersten PDSCH übereinstimmt.

11. Verfahren nach Anspruch 8, das ferner umfasst:
Bestimmen, als Reaktion darauf, dass die DCI mit mehr als einer TCI konfiguriert werden, dass eine TCI einer QCL für mindestens einen PDSCH in der zweiten PDSCH-Kategorie auf der Grundlage mindestens einer der mehr als einen TCI bestimmt wird.

12. Verfahren nach Anspruch 11,
wobei das as Bestimmen, dass die TCI der QCL für den mindestens einen PDSCH der zweiten PDSCH-Kategorie auf der Grundlage der mindestens einen der mehreren TCI bestimmt wird, umfasst:
Bestimmen der TCI der QCL für den mindestens einen PDSCH der zweiten PDSCH-Kategorie, sodass sie N der mehr als einer TCI eins zu eins entspricht, als Reaktion darauf, dass eine Anzahl des mindestens einen PDSCH der zweiten PDSCH-Kategorie kleiner oder gleich einer Anzahl der mehr als einen TCI ist, wobei N gleich oder größer als eins ist und eine Anzahl von PDSCHs der zweiten PDSCH-Kategorie darstellt.

13. Verfahren nach Anspruch 12, das ferner umfasst:
Bestimmen, als Reaktion darauf, dass zwei der mehr als eine TCI, die in den DCI konfiguriert sind, unterschiedlichen QCL-Typen D entsprechen, dass ein Zeitbereichsintervall zwischen zwei PDSCH-Slots, die den beiden der mehr als einen TCI entsprechen, größer oder gleich einem festgelegten Intervall ist.

14. Verfahren nach Anspruch 13, das ferner umfasst:
Bestimmen, dass das Zeitbereichsintervall zwischen den beiden PDSCH-Slots, die den beiden der mehr als einen TCI entsprechen, mit einem Subcarrier-Abstand zusammenhängt.

15. Vorrichtung, die aufweist:
einen Prozessor; und
einen Speicher zum Speichern von Anweisungen, die von dem Prozessor ausführbar sind;
wobei der Prozessor so ausgebildet ist, dass er die ausführbaren Anweisungen im Speicher ausführt, um Schritte des Verfahrens nach einem der Ansprüche 1 bis 7 oder des Verfahrens nach einem der Ansprüche 8 bis 14 zu implementieren.

## Revendications

1. Procédé de configuration d'un canal de commande de liaison descendante, mis en œuvre par un dispositif de réseau, comprenant les étapes consistant à :
configurer (S11) un canal physique partagé de liaison descendante, dit PDSCH, à multiples intervalles temporels de transmission, dits multi-TTI, planifié par des informations de commande de liaison descendante, dites DCI, pour qu'il comprenne une première catégorie de PDSCH et une seconde catégorie de PDSCH ; dans lequel la première catégorie de PDSCH comprend une pluralité de PDSCH, la seconde catégorie de PDSCH comprend une pluralité de PDSCH, un décalage de planification entre chacun des PDSCH de la première catégorie de PDSCH et un canal physique de commande de liaison descendante, dit PDCCH, des DCI est inférieur à un seuil prédéfini et un décalage de planification entre chacun des PDSCH de la seconde catégorie de PDSCH et le PDCCH des DCI est supérieur ou égal au seuil prédéfini ; et
effectuer une transmission de PDSCH à multi-TTI conformément à la configuration ;
**caractérisé en ce que** le procédé comprend en outre les étapes consistant à :
configurer une indication de configuration de transmission, dite TCI, d'une quasi-co-localisation, dite QCL, de chacun des PDSCH de la première catégorie de PDSCH pour qu'elle soit la même qu'une TCI d'un ensemble de ressources de commande, dit CORESET, ayant un index le plus petit parmi des CORESET dans un espace de recherche d'un créneau le plus proche, à partir du PDSCH, que surveille un équipement d'utilisateur ; et
configurer une TCI d'une QCL d'au moins un PDSCH de la seconde catégorie de PDSCH pour qu'elle soit la même qu'une TCI du PDCCH des DCI, en réponse au fait que les DCI sont configurées sans TCI ; ou configurer, en réponse au fait que les DCI sont configurées avec une TCI, une TCI d'une QCL d'au moins un PDSCH de la seconde catégorie de PDSCH pour qu'elle soit la même que la première TCI.

2. Procédé selon la revendication 1, comprenant en outre l'étape consistant à :
configurer une TCI d'une QCL d'un premier PDSCH de la première catégorie de PDSCH pour qu'elle soit la même qu'une TCI d'un ensemble de ressources de commande, dit CORESET, ayant un index le plus petit parmi des CORESET dans un espace de recherche d'un créneau le plus proche, à partir du PDSCH, que surveille un équipement d'utilisateur.

3. Procédé selon la revendication 2, comprenant en outre l'étape consistant à :
configurer une TCI d'une QCL de chacun des PDSCH de la première catégorie de PDSCH à l'exception du premier PDSCH, pour qu'elle soit la même qu'une TCI du premier PDSCH.

4. Procédé selon la revendication 1, comprenant en outre l'étape consistant à :
configurer, en réponse au fait que les DCI sont configurées avec plus d'une TCI, une TCI d'une QCL d'au moins un PDSCH de la seconde catégorie de PDSCH pour qu'elle soit déterminée sur la base d'au moins l'une des plus d'une TCI.

5. Procédé selon la revendication 4, dans lequel
l'étape de configuration de la TCI de la QCL de l'au moins un PDSCH de la seconde catégorie de PDSCH pour qu'elle soit déterminée sur la base de l'au moins une TCI des plus d'une TCI consiste à :
configurer la TCI de la QCL de l'au moins un PDSCH de la seconde catégorie de PDSCH pour qu'elle corresponde à N des plus d'une TCI de manière biunivoque, en réponse au fait qu'un nombre de l'au moins un PDSCH de la seconde catégorie de PDSCH est inférieur ou égal à un nombre des plus d'une TCI, dans lequel N est égal ou supérieur à un, et est un nombre de PDSCH de la seconde catégorie de PDSCH.

6. Procédé selon la revendication 5, comprenant en outre l'étape consistant à :
configurer, en réponse au fait que deux des plus d'une TCI configurées dans les DCI correspondent à un type D de QCL différente, un intervalle de domaine temporel entre deux créneaux de PDSCH correspondant aux deux des plus d'une TCI pour qu'il soit supérieur ou égal à un intervalle défini.

7. Procédé selon la revendication 6, comprenant en outre l'étape consistant à :
configurer l'intervalle de domaine temporel entre les deux créneaux de PDSCH correspondant aux deux des plus d'une TCI pour qu'il soit associé à un espacement entre sous-porteuses.

8. Procédé de détermination d'un canal de commande de liaison descendante, mis en œuvre par un équipement d'utilisateur, comprenant les étapes consistant à :
déterminer (S21) un canal physique partagé de liaison descendante, dit PDSCH, à multiples intervalles temporels de transmission, dits multi-TTI, planifié par des informations de commande de liaison descendante, dites DCI, pour qu'il comprenne au moins l'une : d'une première catégorie de PDSCH ou d'une seconde catégorie de PDSCH ; dans lequel la première catégorie de PDSCH comprend une pluralité de PDSCH, la seconde catégorie de PDSCH comprend une pluralité de PDSCH, un décalage de planification entre chacun des PDSCH de la première catégorie de PDSCH et un canal physique de commande de liaison descendante, dit PDCCH, des DCI est inférieur à un seuil prédéfini et un décalage de planification entre chacun des PDSCH de la seconde catégorie de PDSCH et le PDCCH des DCI est supérieur ou égal au seuil prédéfini ; et
effectuer une transmission de PDSCH à multi-TTI conformément à la configuration ;
**caractérisé en ce que** le procédé comprend en outre les étapes consistant à :
déterminer qu'une indication de configuration de transmission, dite TCI, d'une quasi-co-localisation, dite QCL, de chacun des PDSCH de la première catégorie de PDSCH est la même qu'une TCI d'un ensemble de ressources de commande, dit CORESET, ayant un index le plus petit parmi des CORESET dans un espace de recherche d'un créneau le plus proche, à partir du PDSCH, que surveille un équipement d'utilisateur ; et
déterminer qu'une TCI d'une QCL d'au moins un PDSCH de la seconde catégorie de PDSCH est la même qu'une TCI du PDCCH des DCI, en réponse au fait que les DCI sont configurées sans TCI ; ou déterminer, en réponse au fait que les DCI sont configurées avec une TCI, qu'une TCI d'une QCL d'au moins un PDSCH de la seconde catégorie de PDSCH est la même que la première TCI.

9. Procédé selon la revendication 8, comprenant en outre l'étape consistant à :
déterminer qu'une TCI d'une QCL d'un premier PDSCH de la première catégorie de PDSCH est la même qu'une TCI d'un ensemble de ressources de commande, dit CORESET, ayant un index le plus petit parmi des CORESET dans un espace de recherche d'un créneau le plus proche, à partir du PDSCH, que surveille un équipement d'utilisateur.

10. Procédé selon la revendication 9, comprenant en outre l'étape consistant à : déterminer qu'une TCI d'une QCL de chacun des PDSCH de la première catégorie de PDSCH à l'exception du premier PDSCH, est la même qu'une TCI du premier PDSCH.

11. Procédé selon la revendication 8, comprenant en outre l'étape consistant à :
déterminer, en réponse au fait que les DCI sont configurées avec plus d'une TCI, qu'une TCI d'une QCL d'au moins un PDSCH de la seconde catégorie de PDSCH est déterminée sur la base d'au moins l'une des plus d'une TCI.

12. Procédé selon la revendication 11, dans lequel
l'étape de détermination du fait que la TCI de la QCL de l'au moins un PDSCH de la seconde catégorie de PDSCH est déterminée sur la base de l'au moins une TCI des plus d'une TCI consiste à :
déterminer la TCI de la QCL de l'au moins un PDSCH de la seconde catégorie de PDSCH pour qu'elle corresponde à N des plus d'une TCI de manière biunivoque, en réponse au fait qu'un nombre de l'au moins un PDSCH de la seconde catégorie de PDSCH est inférieur ou égal à un nombre des plus d'une TCI, dans lequel N est égal ou supérieur à un, et est un nombre de PDSCH de la seconde catégorie de PDSCH.

13. Procédé selon la revendication 12, comprenant en outre l'étape consistant à :
déterminer, en réponse au fait que deux des plus d'une TCI configurées dans les DCI correspondent à un type D de QCL différente, qu'un intervalle de domaine temporel entre deux créneaux de PDSCH correspondant aux deux des plus d'une TCI est supérieur ou égal à un intervalle défini.

14. Procédé selon la revendication 13, comprenant en outre l'étape consistant à :
déterminer que l'intervalle de domaine temporel entre les deux créneaux de PDSCH correspondant aux deux des plus d'une TCI est associé à un espacement entre sous-porteuses.

15. Dispositif, comprenant :
un processeur ; et
une mémoire destinée à maintenir des instructions exécutables par le processeur ;
dans lequel le processeur est configuré pour exécuter les instructions exécutables dans la mémoire pour mettre en œuvre les étapes du procédé selon l'une quelconque des revendications 1 à 7 ou du procédé selon l'une quelconque des revendications 8 à 14.
